# EUROPÄISCHE PATENTSCHRIFT

(11) **EP 0 675 308 B1**
(45) Veröffentlichungstag und Bekanntmachung des Hinweises auf die Patenterteilung: **08.04.1998**
(21) Anmeldenummer: 95810016.6
(22) Anmeldetag: 10.01.1995
(51) Int. Cl.: F16L 5/04

(54) **Rohrmanschette**
Pipe collar
Manchon de tuyaux

(30) Priorität: 31.03.1994 DE 4411220
(43) Veröffentlichungstag der Anmeldung: 04.10.1995
(73) Patentinhaber: HILTI Aktiengesellschaft, 9494 Schaan (LI)
(72) Erfinder: Gantner, Gebhard, A-6710 Nenzing (AT); Münzenberger, Herbert, D-65191 Wiesbaden (DE); Dengg, Franz, D-66123 Saarbrücken (DE); Ofner, Peter, A-6800 Feldkirch (AT)
(74) Vertreter: Wildi, Roland

(56) Entgegenhaltungen:
- EP-A- 0 486 299
- GB-A- 2 233 725
- US-A- 4 850 385

## Beschreibung

Die Erfindung betrifft eine Rohrmanschette gemäss dem Oberbegriff des Patentanspruchs 1.

Zur Abschottung von brennbaren Rohren sind Rohrmanschetten bekannt, die aus einem Wandungsteil und einem mit im Bereich wenigstens einer Stimseite des Wandungsteiles radial abragendem Befestigungsteil bestehen. Das Wandungsteil setzt sich im wesentlichen aus zwei halbschalenartig ausgebildeten Elementen zusammen, die gegeneinander schwenkbar sind.

Das Befestigungsteil besteht aus einem Flansch, der im stimseitigen Bereich vom Wandungsteil radial nach aussen abragt und sich um den gesamten Umfang der Rohrmanschette erstreckt. Der Flansch hat wenigstens eine Durchgangsbohrung, die der Durchsetzung eines mit einem Untergrund in Verbindung bringbaren Befestigungselementes dient, um den Flansch, bzw. die gesamte Rohrmanschette an einem Untergrund festlegen zu können. In der Rohrmanschette befindet sich eine Einlage mit brandhemmenden Eigenschaften.

Die Verwendung dieser bekannten Rohrmanschette ist bei Rohren, die in Ecken, nahe an Wänden, Decken oder Böden angeordnet sind, nicht möglich, da der radiale Überstand des Flansches eine Montage der Rohrmanschette in der gewünschten Lage nicht zulässt.

Aus der den nächsten Stand der Technik bildenden EP-A-0 486 299 ist eine Rohrmanschette mit einem Wandungsteil und mit im Bereich einer Stirnseite des Wandungsteils vom Umfang des Wandungsteils radial abragenden Befestigungsteilen bekannt, die lösbar mit dem Wandungsteil verbunden sind. Die Befestigungsteile weisen mit Schlitzen versehene Fussteile auf, durch die Laschen geführt sind, die radial vom Umfang des Wandungsteils abragen. Zur Fixierung der Befestigungsteile werden die Laschen zum Umfang des Wandungsteils hin umgebogen. Zum Lösen der Befestigungsteile müssen die Laschen wieder in radial abragende Position zurückgebogen werden, bevor das Befestigungsteil abgehoben werden kann. Da es ja ermöglicht sein muss, die Laschen einfach umzubiegen, kann die Wandstärke der Laschen nicht besonders gross gewählt werden. Dadurch sind aber der Festigkeit der Laschen Grenzen gesetzt. Nach mehrfachem Umbiegen der Laschen kann es daher vorkommen, dass diese abbrechen und ein wichtiger Befestigungspunkt verloren geht. Das kann soweit führen, dass die Rohrmanschette ersetzt werden muss. Aufgrund der relativ geringen Festigkeit der Laschen ist die Fixierung der Befestigungteile durch die umgebogenen Laschen nicht besonders stabil. Es besteht die Gefahr, dass eine Lasche allein schon durch das Gewicht der Rohrleitung oder bei einer Manipulation an der Rohrleitung aufgebogen wird und sich ein Befestigungsteil vom Wandungsteil löst. Dies ist äusserst unerwünscht und kann zu gefährlichen Situationen führen. Um derartigen Gefahren zu begegnen, muss der Anwender dieser bekannten Rohrmanschette weitere Befestigungsteile am Wandungsteil vorsehen, in der Hoffnung, dass nicht alle gleichzeitig versagen. In einer alternativen Ausbildung der bekannten Rohrmanschette können die radial abragenden Laschen mit einer grösseren Wandstärke ausgebildet sein, um ihre Festigkeit zu erhöhen. Dies hat für den Anwender der Rohrmanschette jedoch den Nachteil, dass die Laschen nur mehr sehr schwer und nur mit einem Hilfswerkzeug umgebogen werden können. Dabei kann es vorkommen, dass die Laschen wegen ihrer grösseren Steifigkeit nur unvollständig umgebogen werden. Dies kann dazu führen, dass die Befestigungsteile nicht ausreichend am Umfang fixiert sind und sich bei Belastung lösen können.

Der Erfindung liegt die Aufgabe zugrunde, eine Rohrmanschette zu schaffen, die schnell und einfach an Rohren anordbar ist, die in Ecken, nahe an Wänden, Decken oder Böden verlegt sind.

Erfindungsgemäss wird die Aufgabe durch eine Brandlasche mit den im kennzeichnenden Teil des Patentanspruchs 1 angeführten Merkmalen gelöst.

Indem am Umfang des Wandungsteils wenigstens eine taschenartige Aufnahme vorgesehen ist, deren lichter Querschnitt parallel zur Mittellängsachse des Wandungsteils orientiert ist, kann das Befestigungteil einfach am Wandungsteil gehaltert werden. Es müssen keine Laschen umgebogen werden, um das Befestigungsteil zu fixieren oder wieder zu lösen. Die taschenartige Aufnahme kann daher in der erforderlichen Steifigkeit und Festigkeit ausgebildet sein, ohne dass der Anwender dadurch Nachteile in Kauf nehmen muss. Die Fixierung der Halterung erfolgt einfach durch Einführen in die taschenartige Aufnahme. Auf spezielle Hilfswerkzeuge oder dergleichen kann verzichtet werden. Die Orientierung der Aufnahmeöffnung erlaubt die Festlegung der Rohrmanschette mit einer Stirnseite an der Oberfläche eines Untergrunds.

Um eine Anbringung des Befestigungsteiles am Umfang des Wandungsteiles in Abhängigkeit des vorhandenen Platzes möglich zu machen, ist es von Vorteil, wenn mehrere Laschen entlang wenigstens einer Umfangslinie am Umfang des Wandungsteiles angeordnet sind.

Aus herstellungs- und montagetechnischen Gründen sind die Laschen zweckmässigerweise unter im wesentlichen gleichen Abständen am Umfang angeordnet. Die diagonale Anordnung der Befestigungsteile und die Anordnung der Befestigungsteile in gleichen Abständen zueinander ist somit möglich. Die Haltekraft der am Untergrund festgelegten Befestigungsteile wird auf diese Weise gleichmässig am Umfang des Wandungsteiles verteilt.

Um ein Einhängen des Befestigungsteiles in dem lichten Querschnitt der Laschen des Wandungsteiles ermöglichen zu können, weist das Befestigungsteil vorzugsweise einen im wesentlichen entlang einer Mantellinie des Wandungsteiles verlaufenden, in die Lasche einführbaren Haken auf. Neben dem Haken hat das Befestigungsteil auch eine Klemmfläche, die im wesentlichen rechtwinklig zur Öffnung des Hakens verläuft und wenigstens eine Durchtrittsöffnung aufweist, die der Durchsetzung eines Befestigungselementes dient.

Um eine gute Halterung des Hakens in der Lasche ermöglichen zu können, ist der Haken zweckmässigerweise als Federclip ausgebildet. Der erfindungsgemässe Haken besitzt eine Öffnungsweite, die geringfügig kleiner ist als die Materialstärke des Wandungsteiles im Bereich der Lasche. Beim Einschieben des Hakens in die Lasche wird der Haken geringfügig aufgeweitet, so dass er unter Vorspannung versetzt wird und zusammen mit der Lasche eine reibschlüssige Verbindung eingeht.

Eine weitere Möglichkeit, die Verlierbarkeit des Befestigungsteiles von dem Wandungsteil verhindem zu können, besteht darin, eine formschlüssige Verbindung zwischen dem Befestigungsteil und dem Wandungsteil zu schaffen. Vorzugsweise wird dies mit einem Haken erreicht, der ein mit der Lasche in Verbindung bringbares Rastelement aufweist. Als Rastelement kann der Haken an der Innenseite wenigstens einen Vorsprung aufweisen, der in eine entsprechend an der Lasche angeordnete Vertiefung bzw. Durchtritttsöffnung rücken kann.

Der Festlegung des Wandungsteiles können mehrere Befestigungsteile dienen.

Die Erfindung wird anhand von Zeichnungen, die zwei Ausführungsbeispiele wiedergeben, näher erläutert. Es zeigen:
- Fig. 1: eine erfindungsgemässe Rohrmanschette im festgelegten Zustand;
- Fig. 2: ein Befestigungsteil für die Befestigung einer Rohrmanschette gemäss Fig. 1;
- Fig. 3: eine weitere erfindungsgemässe Rohrmanschette mit mehreren, entlang zweier Umfangslinien am Umfang des Wandungsteiles angeordneten Laschen.

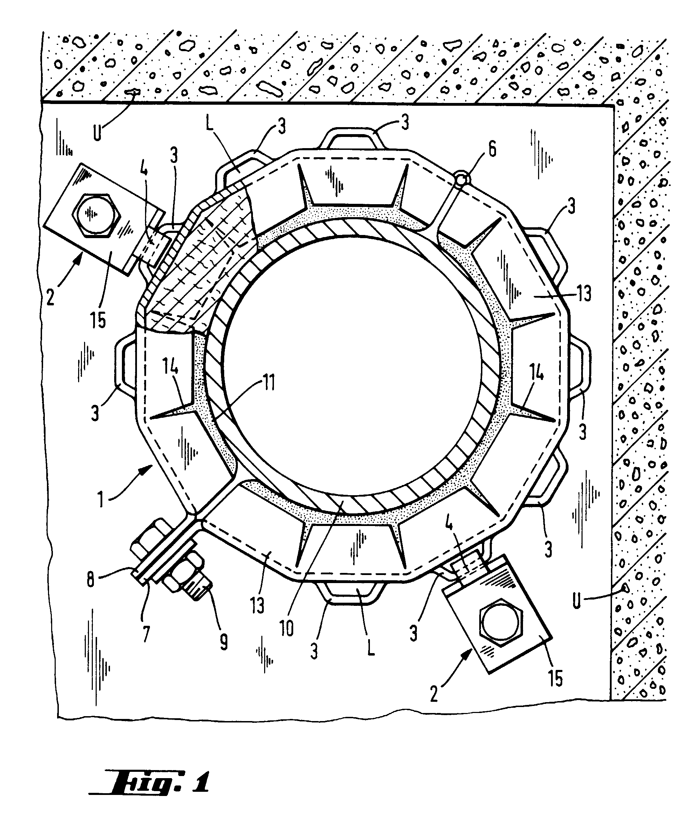

Die in Fig. 1 dargestellte Rohrmanschette weist ein Wandungsteil 1 mit zwei halbschalenartig ausgebildeten Elementen auf, die über eine gemeinsame Schwenkachse 6 gegeneinander schwenkbar sind. Die Endbereiche des Wandungsteiles 1, die der Schwenkachse 6 gegenüberliegen, sind gebildet von zwei radial abragenden Flanschen 7, 8, die dem Verspannen des Wandungsteiles 1 dienen. Die Verspannung erfolgt mittels wenigstens einer Klemmschraube 9, die durch entsprechende Durchtrittsöffnungen der Flansche 7, 8 hindurchragen.

Das Wandungsteil 1 besteht aus einem Blechprofil, das in Umfangsrichtung mehrmals abgekantet ist, um eine im wesentlichen kreisrunde Form zu bilden. An den Stimseiten 13 des Wandungsteiles 1 erstrecken sich umgebogene, seitliche Verlängerungen in Richtung Mittellängsachse der Rohrmanschette, die entsprechende Materialaussparungen 14 aufweisen, um dem Wandungsteil 1 eine kreisrunde Form geben zu können. Die nach innen abgebogenen, seitlichen Verlängerungen des Wandungsteiles 1 gestatten die Aufnahme und die Führung einer Einlage 11 mit brandhemmenden Eigenschaften.

Das Wandungsteil 1 besitzt am Umfang mehrere gleichmässig verteilt angeordnete, im wesentlichen radial abstehende Laschen 3, die in Verbindung mit wenigstens einem Befestigungsteil 2 der Festlegung der Rohrmanschette an der Oberfläche eines Untergrundes U dienen.

Die dargestellte Rohrmanschette umschliesst ein Rohr 10, welches in der Ecke eines Bauwerkes verlegt ist. Die beiden Befestigungsteile 2 können nicht überall am Umfang der Wandungsteile 1 angeordnet werden. Aufgrund der mehreren am Umfang der Wandungsteile 1 angeordneten Laschen 3 können die Befestigungsteile 2 trotzdem so nahe wie möglich an die Wände herangeführt und befestigt werden. Die beiden Befestigungsteile 2 liegen sich im wesentlichen diagonal gegenüber. Bei der Festlegung des Wandungsteiles 1 können mehrere Befestigungsteile 2 für die Befestigung der Rohrmanschette verwendet werden.

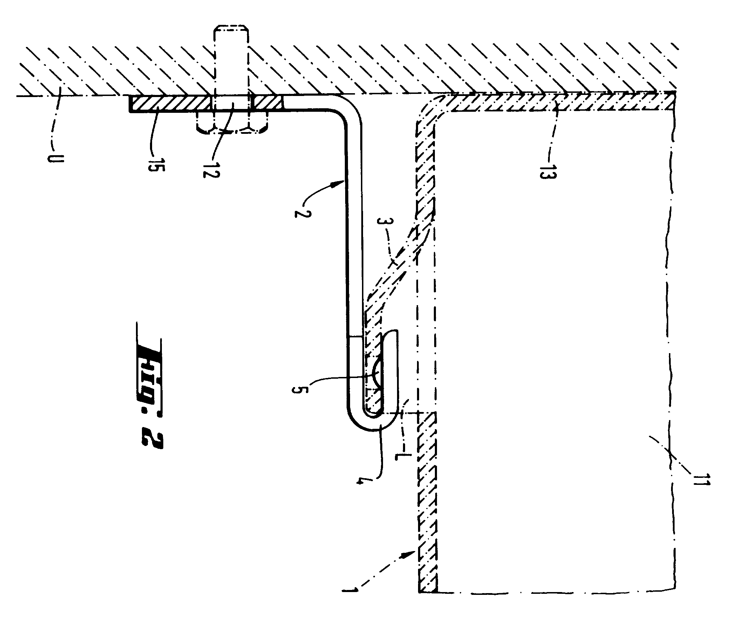

Das in Fig. 2 dargestellte Befestigungsteil 2 besitzt einen Haken 4 und eine Klemmfläche 15, die durchsetzt ist von einer Durchtrittsöffnung 12. An der Innenseite des Hakens 4 ist ein Rastelement 5 in Form eines Vorsprunges angeordnet, das mit einer entsprechenden, schematisch dargestellten Vertiefung oder Durchtrittsöffnung in der Lasche des Halteteiles einen Formschluss eingehen kann.

Um eine gute Festlegung des Befestigungsteiles 2 am Untergrund U erreichen zu können, ist die Breite der Klemmfläche 15 grösser ausgebildet als die auf den lichten Querschnitt der Lasche abgestimmte Breite des Hakens 4.

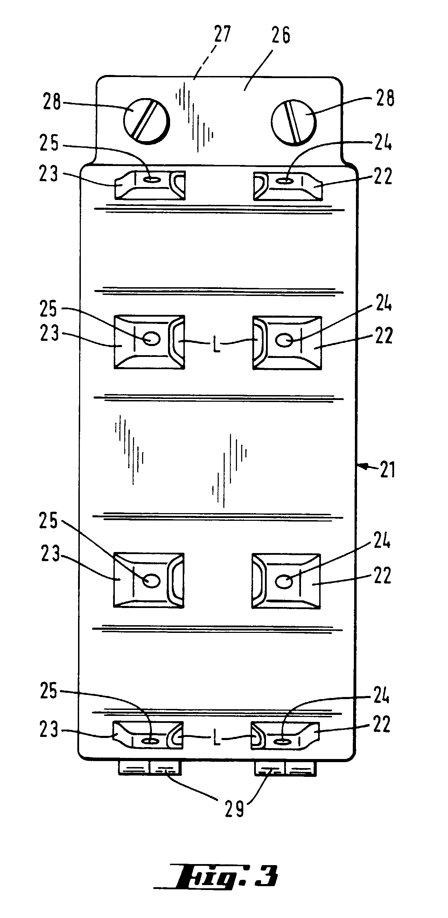

Das Wandungsteil 21 der in Fig. 3 dargestellten Rohrmanschette besteht ebenfalls aus zwei halbschalenartig ausgebildeten Elementen, die über eine Schwenkachse 29 schwenkbar miteinander verbunden sind und radial abstehende Flansche 26, 27 aufweisen. Die Flansche 26, 27 werden gegeneinander mit Hilfe von Klemmschrauben 28 verspannt. Entlang zweier Umfangslinien sind am Umfang verteilt mehrere Laschen 22, 23 angeordnet. Die lichten Weiten bzw. Querschnitte L der Laschen 22, 23 weisen dabei zueinander, sind aber voneinander beabstandet, um das Einführen des Hakens eines nicht dargestellten Befestigungsteiles zu ermöglichen. Die Laschen 22, 23 weisen Durchtrittsöffnungen 24, 25 auf, die mit Rastelementen am Haken der Befestigungsteile einen Formschluss eingehen können.

## Patentansprüche

1. Rohrmanschette mit einem Wandungsteil (1; 21) und mit wenigstes einem, im Bereich wenigstens einer Stirnseite des Wandungsteils (1; 21) vom Umfang des Wandungsteils (1; 21) radial abragenden Befestigungsteil (2), welches lösbar mit dem Wandungsteil (1; 21) verbunden ist, **dadurch gekennzeichnet**, dass zur Halterung des Befestigungsteils (2) am Umfang des Wandungsteils (1; 21) wenigstens eine taschenartige Aufnahme (3; 22, 23) vorgesehen ist, deren lichter Querschnitt (L) parallel zur Mittellängsachse des Wandungsteils (1; 21) orientiert ist.

2. Rohrmanschette nach Anspruch 1, dadurch gekennzeichnet, dass mehrere taschenartige Aufnahmen (3; 22, 23) entlang wenigstens einer Umfangslinie am Umfang des Wandungsteils (1; 21) angeordnet sind.

3. Rohrmanschette nach Anspruch 2, dadurch gekennzeichnet, dass die taschenartigen Aufnahmen (3; 22, 23) entlang des Umfangs des Wandungsteils (1; 21) im wesentlichen im gleichen Abstand voneinander angeordnet sind.

4. Rohrmanschette nach Anspruch 2 oder 3, dadurch gekennzeichnet, dass die taschenartigen Aufnahmen (22, 23), jeweils paarweise einander gegenüberliegend, entlang von zwei Umfangslinien am Umfang des Wandungsteils (21) angeordnet sind, wobei die Aufnahmeöffnungen (L) jedes Paars von Aufnahmen (22, 23) einander zugekehrt sind.

5. Rohrmanschette nach einem der vorangehenden Ansprüche, dadurch gekennzeichnet, dass das Befestigungsteil (2) einen im wesentlichen entlang einer Mantellinie des Wandungsteils (1; 21) verlaufenden Haken (4) aufweist, der in die Aufnahmeöffnung (L) einer taschenartigen Aufnahme (3; 22, 23) einführbar ist.

6. Rohrmanschette nach Anspruch 5, dadurch gekennzeichnet, dass der Haken (4) als Federclip ausgebildet ist.

7. Rohrmanschette nach Anspruch 4 oder 5, dadurch gekennzeichnet, dass am Haken (4) ein Rastelement (5) angeordnet ist, das mit einer Ausnehmung oder einer Durchtrittsöffnung (24, 25) der taschenartigen Aufnahme verrastbar ist.

## Claims

1. Pipe collar comprising a wall element (1; 21) and at least one mounting element (2) which radially protrudes in the area of at least one end of the wall element (1; 21) from the periphery of the wall element (1; 21) and which is detachably connected to the wall element (1; 21), **characterised in that** at least one pocket like receptacle (3; 22, 23), the clear cross-section (L) of which is oriented parallel to the middle longitudinal axis of the wall element (1; 21), is provided for the purpose of holding the mounting element (2) at the periphery of the wall element (1; 21).

2. Pipe collar according to Claim 1, **characterised in that** a plurality of pocket like receptacles (3; 22, 23) is arranged along at least one peripheral line on the periphery of the wall element (1; 21).

3. Pipe collar according to Claim 2, **characterised in that** the pocket like receptacles (3; 22, 23) are arranged along the periphery of the wall element (1; 21) at essentially the same distance from each other.

4. Pipe collar according to Claim 2 or 3, **characterised in that** the pocket like receptacles (22, 23), lying opposite each other in pairs, are arranged along two peripheral lines on the periphery of the wall element (21), and the receiving openings (L) of each pair of receptacles (22, 23) are facing towards each other.

5. Pipe collar according to one of the above claims, **characterised in that** the mounting element (2) comprises a hook (4), which extends essentially along a casing line of the wall element (1; 21) and which is insertible into the receiving opening (L) of a pocket like receptacle (3; 22, 23).

6. Pipe collar according to Claim 5, **characterised in that** the hook (4) is designed as a spring clip.

7. Pipe collar according to Claim 4 or 5, **characterised in that** on the hook (4) is arranged a detent element (5) which is detentable to a cutout or passage (24, 25) of the pocket like receptacle.

## Revendications

1. Manchon de tuyau, comprenant une section de paroi (1 ; 21) et au moins un élément de fixation (2) qui, dans la région d'au moins une surface frontale de la section de paroi (1 ; 21), dépasse radialement de la périphérie de la section de paroi (1 ; 21) et est rattaché de manière amovible à ladite section de paroi (1 ; 21), **caractérisé en ce** que pour la fixation de l'élément de fixation (2), il est prévu sur la périphérie de la section de paroi (1 ; 21) au moins un logement (3 ; 22, 23) en forme de poche dont la dimension intérieure (L) est orientée parallèlement à l'axe longitudinal médian de la section de paroi (1 ; 21).

2. Manchon de tuyau selon la revendication 1, caractérisé en ce que plusieurs logements (3 ; 22, 23) en forme de poches sont disposés le long d'au moins une ligne périphérique sur la périphérie de la section de paroi (1 ; 21).

3. Manchon de tuyau selon la revendication 2, caractérisé en ce que les logements (3 ; 22, 23) en forme de poches sont disposés le long de la périphérie de la section de paroi (1 ; 21), sensiblement à des distances égales les uns par rapport aux autres.

4. Manchon de tuyau selon la revendication 2 ou 3, caractérisé en ce que les logements (22, 23) en forme de poches sont respectivement disposés par paires diamétralement opposées, le long de deux lignes périphériques sur la périphérie de la section de paroi (21), les ouvertures de réception (L) de chaque paire de logements (22, 23) étant tournées l'une vers l'autre.

5. Manchon de tuyau selon l'une des revendications précédentes, caractérisé en ce que l'élément de fixation (2) comporte un crochet (4) qui s'étend sensiblement le long d'une génératrice de la section de paroi (1 ; 21) et peut être introduit dans l'ouverture de réception (L) d'un logement (3 ; 22, 23) en forme de poche.

6. Manchon de tuyau selon la revendication 5, caractérisé en ce que le crochet (4) est conformé en clip à ressort

7. Manchon de tuyau selon la revendication 4 ou 5, caractérisé en ce que sur le crochet (4) est disposé un élément d'arrêt (5) qui peut s'encliqueter dans un évidement ou dans une ouverture de passage (24, 25) du logement en forme de poche.
